# EUROPÄISCHE PATENTANMELDUNG

(11) **EP 4 693 850 A1**
(43) Veröffentlichungstag der Anmeldung: **11.02.2026**
(21) Anmeldenummer: 24193321.7
(22) Anmeldetag: 07.08.2024
(51) Int. Cl.: H02K 15/70, H02P 6/00, H02K 7/14

(54) **BETRIEBSVERFAHREN FÜR EINE MOBILE WERKZEUGMASCHINE**

(71) Anmelder: Hilti Aktiengesellschaft, 9494 Schaan (LI)
(72) Erfinder: Hurka, Florian, 86459 Margertshausen (DE); Schrenk, Werner, 86830 Schwabmünchen (DE)
(74) Vertreter: Hilti Aktiengesellschaft Corporate Intellectual Property

(57) **Zusammenfassung**

Verfahren zum Betreiben einer mobilen Werkzeugmaschine, die einen Elektromotor hat, der einen Rotor zum Erzeugen eines Rotor-festen Magnetfelds und einen Stator zum Erzeugen eines rotierenden Magnetfelds hat, wobei das Verfahren einen ersten Betriebsmodus hat, der enthält: Ansteuern des Stators zum Rotieren des Rotors. Das Verfahren hat einen zweiten Betriebsmodus, der enthält: Ansteuern des Stators zum Aufheben eines magnetischen Flusses zumindest in einem mitrotierenden Abschnitt eines Spalts zwischen dem Rotor und dem Stator.

## Beschreibung

### GEBIET DER ERFINDUNG

Die vorliegende Erfindung betrifft ein Verfahren zum Betreiben einer mobilen Werkzeugmaschine, die einen Elektromotor hat, der einen Rotor zum Erzeugen eines Rotor-festen Magnetfelds und einen Stator zum Erzeugen eines rotierenden Magnetfelds hat, wobei das Verfahren einen Betriebsmodus hat, der enthält: Ansteuern des Stators zum Rotieren des Rotors. Außerdem betrifft die vorliegende Erfindung ein Computerprogrammprodukt, ein entsprechendes Steuergerät für eine mobile Werkzeugmaschine und eine entsprechende mobile Werkzeugmaschine.

Mobile Werkzeugmaschinen der eingangs genannten Art können dazu genutzt werden, Metallteile zu bearbeiten. Als Beispiel seien eine tragbare Metallsäge oder ein Winkelschleifer genannt. Dabei kann es dazu kommen, dass ein feiner ferromagnetischer Metallstaub entsteht, in die Werkzeugmaschine eindringt, und sich in einem Spalt zwischen dem Rotor und dem Stator an den Stator anlagert. Ursächlich für das Anlagern ist ein magnetischer Fluss zwischen dem Rotor und dem Stator infolge des Ansteuerns zum Rotieren des Rotors. Es kann dann dazu kommen, dass der angelagerte Metallstaub einen Wirkungsgrad der Werkzeugmaschine heruntersetzt und/oder den Elektromotor verschleißt.

Vor diesem Hintergrund besteht eine Aufgabe der vorliegenden Erfindung darin, ein Mittel zum Entfernen des ferromagnetischen Metallstaubs aus dem Spalt zwischen Stator und Rotor einer mobilen Werkzeugmaschine bereitzustellen.

### OFFENBARUNG DER ERFINDUNG

Demgemäß wird ein Verfahren zum Betreiben einer mobilen Werkzeugmaschine vorgeschlagen. Die mobile Werkzeugmaschine hat einen Elektromotor. Der Elektromotor hat einen Rotor zum Erzeugen eines Rotor-festen Magnetfelds und einen Stator zum Erzeugen eines rotierenden Magnetfelds. Das vorgeschlagene Verfahren hat zumindest einen ersten Betriebsmodus und einen zweiten Betriebsmodus. Der erste Betriebsmodus enthält zumindest: Ansteuern des Stators zum Rotieren des Rotors. Der zweite Betriebsmodus enthält zumindest: Ansteuern des Stators zum Aufheben eines bzw. jedes magnetischen Flusses zumindest in einem mitrotierenden Abschnitt eines Spalts zwischen dem Rotor und dem Stator. Indem der magnetische Fluss in dem Abschnitt bzw. in dem Spalt aufgehoben wird, wird das Anhaften des Metallstaubs zumindest kurzfristig unterbunden. Somit wird ein Lösen des Metallstaubs ermöglicht, etwa durch einen Luftzug in dem Spalt infolge der Rotation des Rotors. Im Ergebnis erfährt die mobile Werkzeugmaschine, welche gemäß dem vorgeschlagenen Verfahren betrieben wird, weniger Verlust und/oder Verschleiß.

Die mobile Werkzeugmaschine ist insbesondere eine mobile Werkzeugmaschine zur Metallbearbeitung, wie beispielsweise ein Winkelschleifer, eine Säge, ein Bohrer oder dergleichen. Die mobile Werkzeugmaschine ist vorzugsweise tragbar, sodass sie beispielsweise ein Gewicht von bis zu 50 kg, stärker bevorzugt bis zu 20 kg haben kann.

Mit anderen Worten, es wird ein Betriebsverfahren für eine mobile Werkzeugmaschine vorgeschlagen. Den ersten Betriebsmodus kann man als einen Leistungsmodus bezeichnen, in dem die Werkzeugmaschine zum Abgeben einer durch den Elektromotor erzeugten Leistung zum Antreiben eines Werkzeugs betrieben wird. Den zweiten Betriebsmodus kann man als einen Selbstreinigungsmodus bezeichnen, in welchem die Werkzeugmaschine zum Reinigen des Spalts zwischen dem Stator und dem Rotor betrieben wird. Es kann sein, dass die Werkzeugmaschine einen oder mehrere zusätzliche Betriebsmodi hat.

Unter dem Ansteuern des Stators zum Rotieren des Rotors kann man insbesondere ein Beaufschlagen mehrerer Spulen des Stators mit elektrischem Wechselstrom verstehen.

Es kann sein, dass das Verfahren in dem zweiten Betriebsmodus enthält: Weiter-Rotieren des Rotors. Unter dem Weiter-Rotieren kann man beispielsweise ein Geöffnet-Halten einer Motorbremse verstehen. Unter dem Weiter-Rotieren kann man beispielsweise ein Beenden bzw. Unterbrechen des Ansteuern des Stators zum Rotieren des Rotors verstehen. Unter dem Weiter-Rotieren kann man beispielsweise ein freies Rotieren des Rotors verstehen, welches beispielsweise unter Einfluss eines Trägheitsmoments und/oder eines Reibungsmoments erfolgt.

Es kann sein, dass das Verfahren enthält: Wechseln in den zweiten Betriebsmodus nur wenn eine Drehzahl des Rotors eine Mindestdrehzahl nicht unterschreitet. Den magnetischen Fluss in dem Abschnitt/Spalt aufzuheben wird häufig mit einem Leistungsabfall des Elektromotors einhergehen. Vor diesem Hintergrund kann die entsprechend gewählte Mindestdrehzahl sicherstellen, dass sich die Drehzahl während des zweiten Betriebsmodus nicht zu sehr absenkt. Dies kann beispielsweise ein Lösen des Metallstaubs gewährleisten.

Es kann sein, dass das Verfahren in dem zweiten Betriebsmodus enthält: Antreiben eines Lüfters zum Erzeugen eines Luftstroms in dem Spalt. Beispielsweise kann der Elektromotor einen Rotor-festen Lüfter haben, sodass durch das obige Sicherstellen der Mindestdrehzahl vor dem Wechseln in den zweiten Betriebsmodus bewirkt wird, dass ein Trägheitsmoment des Rotors den Lüfter antreibt. Beispielsweise kann der Elektromotor einen separat angetriebenen Lüfter haben und/oder kann die Werkzeugmaschine einen separat angetriebenen Gehäuselüfter haben. In diesem Fall kann das Verfahren in dem zweiten Betriebsmodus vorteilhaft enthalten: Ansteuern eines separaten Antriebs des Lüfters zum Erzeugen des Luftstroms in dem Spalt. Mittels des Luftstroms wird der Metallstaub ausgeblasen, der in dem Abschnitt des aufgehobenen magnetischen Flusses nicht mehr anhaftet. Es wird also eine Reinigungswirkung verbessert mit der Folge, dass ein Verlust und/oder Verschleiß schneller bzw. betragsmäßig mehr reduziert wird/werden.

Es kann sein, dass das Verfahren enthält: Wechseln in den zweiten Betriebsmodus nach einem Verstreichen einer Mindestbetriebsdauer in dem ersten Betriebsmodus. Die Mindestbetriebsdauer in dem ersten Betriebsmodus stellt sicher, dass der zweite Betriebsmodus bzw. ein damit einhergehender Leistungsabfall und/oder eine damit einhergehende Lastwechselreaktion (bspw. ein "Ruckeln") einen Anwender nur selten stören. Die Mindestbetriebsdauer kann beispielsweise zumindest 5 Minuten, bevorzugt zumindest 15 Minuten und bevorzugter zumindest 30 Minuten betragen.

Es kann sein, dass das Verfahren enthält: Wechseln in den ersten Betriebsmodus nach einem Verstreichen einer Höchstbetriebsdauer in dem zweiten Betriebsmodus. Die Höchstbetriebsdauer in dem zweiten Betriebsmodus stellt sicher, dass der zweite Betriebsmodus bzw. ein damit einhergehenden Leistungsabfall und/oder eine damit einhergehende Lastwechselreaktion (bspw. ein "Ruckeln") einen Anwender nur kurz stören. Die Höchstbetriebsdauer in dem zweiten Betriebsmodus kann beispielsweise bis zu 15 Sekunden, bevorzugt bis zu 10 Sekunden und bevorzugter bis zu 5 Sekunden betragen.

Es kann sein, dass das Verfahren enthält: Überwachen, ob in dem ersten Betriebsmodus ein lastfreier Zustand vorliegt; und Wechseln in den zweiten Betriebsmodus in einem lastfreien Zustand. Auf diese Weise kann vermieden werden, dass ein Anwender wegen eines (vorübergehenden) Lastabfalls verärgert wird. Vorzugsweise wird nur in einem lastfreien Zustand in den zweiten Betriebsmodus gewechselt. Der lastfreie Zustand entspricht vorzugsweise einem Zustand mit geringer Last.

Es kann sein, dass ein lastfreier Zustand erkannt wird, falls eine elektrische Stromstärke eines dem Stator zugeführten elektrischen Stroms nicht über einem Schwellwert liegt. Somit kann durch Erfassen bzw. Messen der elektrischen Stromstärke des dem Stator zugeführten elektrischen Stroms entschieden werden, dass ein Wechsel in den zweiten Betriebsmodus einen Anwender höchstens wenig beeinträchtigt. Ein beispielhafter Anwendungsfall kann vorliegen, falls der Elektromotor mittels einer Drehzahlregelung zum Halten einer Rotordrehzahl auf einer vorgegebenen Drehzahl betrieben wird.

Es kann sein, dass das Verfahren enthält: Wechseln in den zweiten Betriebsmodus auf eine Benutzereingabe zum Beenden des ersten Betriebsmodus hin. Unter der Benutzereingabe zum Beenden des ersten Betriebsmodus kann man beispielswese ein Betätigen eines Ausschalters oder Beenden eines Einschaltens verstehen. Beispielsweise kann ein Umlegen eines Kippschalters oder ein Loslassen eines gedrückten Schalters erfasst werden. Diese Variante hat den Vorteil, dass ein Anwender durch den Wechsel in den zweiten Betriebsmodus höchstens wenig beeinträchtigt wird. Die Benutzereingabe zum Beenden des ersten Betriebsmodus kann beispielsweise verwendet werden, um den lastfreier Zustand zu erkennen.

Es kann sein, dass der Stator zumindest zwei ansteuerbare Wicklungen enthält; wobei das Ansteuern des Stators zum Aufheben des magnetischen Flusses enthält: Erzeugen eines Stator-Magnetfelds, welches in dem Abschnitt des Spalts einem Magnetfeld des Rotors in Betrag und Richtung entgegengesetzt ist. Dies stellt eine bevorzugte Ausführungsform des Verfahrens dar, weil durch Ansteuern der zumindest zwei Wicklungen das Magnetfeld in dem Stator sehr gut einstellbar ist. Unter einer ansteuerbaren Wicklung kann man eine separat bzw. einzeln bzw. unabhängig ansteuerbare Wicklung verstehen. Dies kann vorzugsweise bedeuten, dass die jeweilige ansteuerbare Wicklung einzeln angeschlossen ist, und dass eine Steuerelektronik die Wicklung gezielt mit einer anderen elektrischen Phase als die anderen Wicklungen beaufschlagen und/oder stromlos schalten kann.

Es kann sein, dass das Verfahren in dem zweiten Betriebsmodus enthält: Erfassen einer Ist-Winkelposition des Rotors; wobei der Stator auf Grundlage der erfassten Ist-Winkelposition des Rotors angesteuert wird. Eine andere Möglichkeit kann sein, den Stator auf Grundlage einer berechneten Winkelposition des Rotors anzusteuern. Eine andere Möglichkeit kann sein, den Stator auf Grundlage einer gemessenen Magnetfeldausrichtung des Magnetfelds des Rotors anzusteuern. Bei bekanntem Rotor-Magnetfeld stellt das Messen der Ist-Winkelposition des Rotors eine sehr zuverlässige und einfach implementierbare Lösung dar.

Es kann sein, dass der Rotor zum permanenten Erzeugen des Rotor-festen Magnetfelds eingerichtet ist. Das vorgeschlagene Verfahren wird vorzugsweise angewendet bei einem Elektromotor, dessen Rotor einen Permanentmagnet zum Erzeugen des Rotor-festen Magnetfelds trägt.

Es kann sein, dass der Rotor zum veränderlichen Erzeugen des Rotor-festen Magnetfelds eingerichtet ist; wobei in dem zweiten Betriebsmodus der Stator und der Rotor zum

Aufheben des magnetischen Flusses abgestimmt angesteuert werden. Beispielsweise kann der Rotor zumindest eine Wicklung tragen, welche über eine Schnittstelle, wie ein Schleifkontaktepaar, bestrombar (mit elektrischem Strom beaufschlagbar) ist. Dies stellt eine weitere bevorzugte Ausführungsform des Elektromotors dar. Hierbei werden vorzugsweise in dem ersten Betriebsmodus der Stator und der Rotor zum Rotieren des Rotors abgestimmt angesteuert.

Weiterhin wird ein Computerprogrammprodukt vorgeschlagen, welches Befehle enthält, die bei einer Ausführung des Programms durch einen Computer diesen veranlassen, das vorstehend beschriebene Verfahren zum Betreiben einer mobilen Werkzeugmaschine auszuführen. Als Computer ist hierbei insbesondere ein Steuergerät für die mobile Werkzeugmaschine anzusehen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Zum Lösen der eingangs genannten Aufgabe wird ein Steuergerät für eine mobile Werkzeugmaschine vorgeschlagen. Das Steuergerät ist eingerichtet und geeignet zum Ansteuern zumindest eines Stators eines Elektromotors der mobilen Werkzeugmaschine. Das vorgeschlagene Steuergerät ist vorbereitet zum Ausführen des vorgeschlagenen und oben beschriebenen Verfahrens zum Betreiben der Werkzeugmaschine. Unter dem Ansteuern kann man insbesondere ein Beaufschlagen des Stators bzw. einer Wicklung / mehrerer Wicklungen des Stators mit elektrischem Strom verstehen. Die für das vorgeschlagene Verfahren beschriebenen Ausführungsformen und Merkmale gelten für das vorgeschlagene Steuergerät entsprechend, sodass das Steuergerät die entsprechenden Vorteile verwirklicht.

Zum Lösen der eingangs genannten Aufgabe wird außerdem eine Antriebsbaugruppe für eine mobile Werkzeugmaschine vorgeschlagen. Die vorgeschlagene Antriebsbaugruppe enthält das vorgeschlagene Steuergerät und den Elektromotor. Der Elektromotor hat den Rotor zum Erzeugen des Rotor-festen Magnetfelds und den Stator zum Erzeugen des rotierenden Magnetfelds. Zumindest der Stator des Elektromotors ist mit dem Steuergerät in einer zum Ansteuern geeigneten Weise elektrisch gekoppelt. Es kann - wie oben beschrieben - sein, dass der Rotor zum veränderlichen Erzeugen des Rotor-festen Magnetfelds eingerichtet ist, wobei das Steuergerät vorzugsweise auch zum Beaufschlagen des Rotors mit elektrischem Strom eingerichtet und mit dem Rotor verschaltet ist. Die vorgeschlagene Antriebsbaugruppe fasst das vorgeschlagene Steuergerät und den Elektromotor vorzugsweise in einer gemeinsam handhabbaren und/oder gemeinsam montierbaren Einheit zusammen. Die Antriebsbaugruppe kann beispielsweise weitere Teile, wie eine elektrische Stromversorgung und/oder ein Getriebe enthalten. Die für das vorgeschlagene Verfahren und/oder für das vorgeschlagene Steuergerät beschriebenen Ausführungsformen und Merkmale gelten für die vorgeschlagene Antriebsbaugruppe entsprechend, sodass die Antriebsbaugruppe die entsprechenden Vorteile realisiert.

Zum Lösen der eingangs genannten Aufgabe wird schließlich auch eine mobile Werkzeugmaschine vorgeschlagen. Die vorgeschlagene Werkzeugmaschine hat einen Elektromotor. Der Elektromotor hat einen Rotor zum Erzeugen eines Rotor-festen Magnetfelds und einen Stator zum Erzeugen eines rotierenden Magnetfelds hat. Die Werkzeugmaschine ist zum Ausführen des vorgeschlagenen und oben beschriebenen Verfahrens zum Betreiben der Werkzeugmaschine eingerichtet. Beispielsweise hat die vorgeschlagene Werkzeugmaschine das vorgeschlagene Steuergerät, welches mit dem Elektromotor gekoppelt ist. Das Steuergerät und der Elektromotor sind vorzugsweise zu der vorgeschlagenen Antriebsbaugruppe zu einer gemeinsam handhabbaren und/oder gemeinsam montierbaren Einheit zusammengefasst. Das Steuergerät und der Elektromotor können beispielsweise in der Werkzeugmaschine verteilt sein, beispielsweise indem sie getrennt gehandhabt und montiert und erst dann oder bei dem Montieren verbunden werden. Die für das vorgeschlagene Verfahren, für das vorgeschlagene Steuergerät und/oder für die vorgeschlagene Antriebsbaugruppe beschriebenen Ausführungsformen und Merkmale gelten für die vorgeschlagene Werkzeugmaschine entsprechend, sodass die mobile Werkzeugmaschine die entsprechenden Vorteile verwirklicht.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

### KURZE BESCHREIBUNG DER FIGUREN

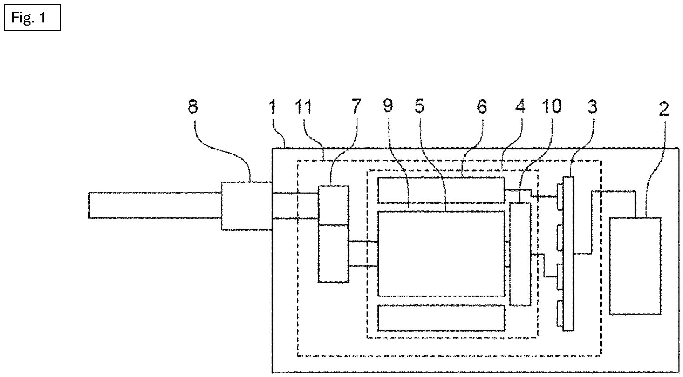

- Fig. 1: zeigt schematisch einen Aufbau einer mobilen Werkzeugmaschine gemäß einer Ausführungsform der Erfindung;

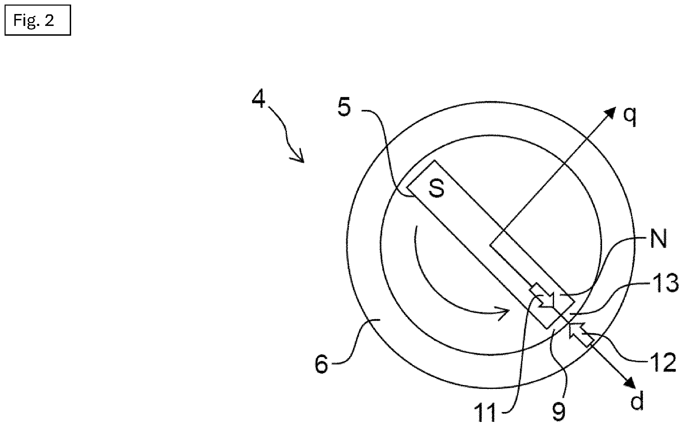

- Fig. 2: zeigt schematisch ein Ansteuern zumindest eines Stators zum Aufheben eines magnetischen Flusses in einem Spalt zwischen dem Stator und einem Rotor eines Elektromotors der mobilen Werkzeugmaschine;
- Fig. 3: zeigt schematisch ein Ablaufdiagramm eines Verfahrens zum Betreiben einer mobilen Werkzeugmaschine gemäß einer Ausführungsform der Erfindung für den Fall, dass die mobile Werkzeugmaschine einen Rotor hat, der zumindest einen Permanentmagneten zum Erzeugen eines Rotor-festen Magnetfelds trägt; und
- Fig. 4: zeigt schematisch ein Ablaufdiagramm eines Verfahrens zum Betreiben einer mobilen Werkzeugmaschine gemäß einer Ausführungsform der Erfindung für den Fall, dass die mobile Werkzeugmaschine einen Rotor hat, der zumindest eine ansteuerbare Wicklung zum Erzeugen eines Rotor-festen Magnetfelds trägt.

In den Figuren sind gleiche oder funktionsgleiche Elemente mit denselben Bezugszeichen versehen worden, sofern nichts anderes angegeben ist.

Eine mobile Werkzeugmaschine 1 hat beispielsweise eine elektrische Stromquelle 2 (eigentlich: Quelle 2 elektrischen Stroms) zum Bereitstellen elektrischen Stroms zum Antreiben der mobilen Werkzeugmaschine 1. Die Stromquelle 2 kann beispielsweise einen Akkumulator enthalten. Die Stromquelle 2 kann beispielsweise ein Netzteil enthalten.

Die mobile Werkzeugmaschine 1 hat beispielsweise ein Steuergerät 3. Das Steuergerät 3 kann beispielsweise eingerichtet sein, um ein später beschriebenes Verfahren M10 und/oder M14 zum Betreiben der mobilen Werkzeugmaschine 1 auszuführen.

Die mobile Werkzeugmaschine 1 hat einen Elektromotor 4, der den Rotor 5 und den Stator 6 hat.

Das Steuergerät 3 ist vorzugsweise zum Ansteuern eines Rotors 5 und/oder eines Stators 6 ausgeführt. Dazu ist das Steuergerät 3 beispielsweist mit mehreren Wicklungen des Stators 6 je getrennt verschaltet.

Das Steuergerät 3 kann des Weiteren beispielsweise mit einer Bedieneinrichtung, wie einem Ein-Aus-Schalter, gekoppelt sein. Das Steuergerät 3 kann außerdem mit Gerätesensoren, wie einem Drehzahlsensor zum Erfassen einer Ist-Drehzahl des Rotors 5 gekoppelt sein.

Der Rotor 5 ist zum Abgeben von rotatorischer Leistung angeordnet. Beispielsweise ist der Rotor 5 über ein Getriebe 7 mit einer Aufnahme 8 für ein Werkzeug gekoppelt.

Zwischen dem Rotor 5 und dem Stator 6 hat der Elektromotor 4 einen Spalt 9. Der Spalt 9 kann als Luftspalt und/oder als Ringspalt beschrieben werden.

Außerdem hat der Elektromotor 4 vorzugsweise einen Rotor-festen Lüfter 10. Der Rotor-feste Lüfter ist zum Erzeugen eines Luftstroms durch den Spalt 9 angeordnet und eingerichtet.

Der Elektromotor 4 und das Steuergerät 3 sind zusammen als vormontierte Antriebsbaugruppe 11 bereitgestellt. Die vormontierte Antriebsbaugruppe 11 enthält optional auch das Getriebe 7.

Der Rotor 5 ist zum Erzeugen eines Rotor-festen Magnetfelds 11 eingerichtet. Beispielsweise trägt der Rotor 5 einen Permanentmagneten. Beispielsweise trägt der Rotor 5 eine Wicklung, die über ein Paar Gleitkontakte mit elektrischem Strom beaufschlagbar ist.

Der Stator 6 ist zum Erzeugen eines rotierenden Magnetfelds 12 eingerichtet. Beispielsweise hat der Stator 6 zumindest zwei zueinander unabhängig mit elektrischem Strom beaufschlagbare Wicklungen.

Im Betrieb der mobilen Werkzeugmaschine 1 kann es zu einem Anlagern metallischen Staubs innen an dem Stator 6 und/oder außen an dem Rotor 5 kommen. Mit anderen Worten, es kann sein, dass sich Metallstaub in dem Luftspalt 9 absetzt. Zum Reinigen des Luftspalts 9 kann das Steuergerät 3 das nachfolgende Verfahren M10 oder M13 zum Betreiben des Elektromotors 4 ausführen.

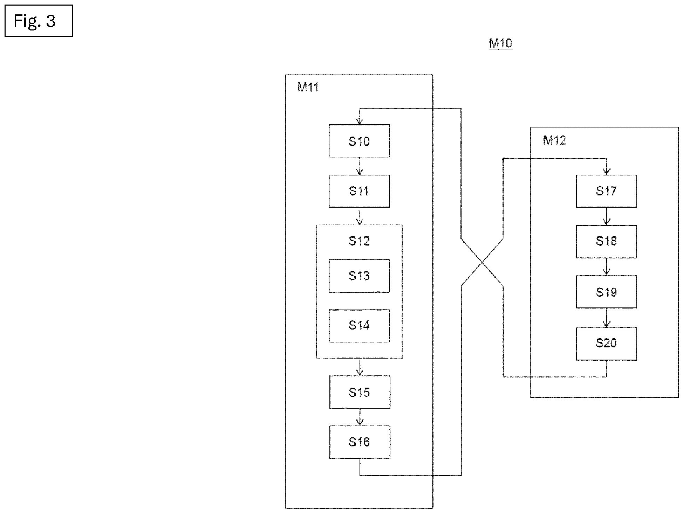

Im Folgenden wird anhand der Fig. 3 zunächst das Verfahren M10 beschrieben, welches für einen Rotor 5 mit Permanentmagnet zum Erzeugen des Rotor-festen Magnetfelds 11 vorgesehen ist. Das beschriebene Verfahren M10 enthält optionale Merkmale.

Der Elektromotor 4 wird zunächst in einem ersten Betriebsmodus M11 betrieben. Der erste Betriebsmodus M11 dient zum Abgeben von Leistung an die Aufnahme 8 für das Werkzeug. Man kann sagen, dass der erste Betriebsmodus zum Erfüllen der bestimmungsgemäßen Aufgabe der mobile Werkzeugmaschine 1 dient.

In einem Schritt S10 wird der Stator 6 zum Rotieren des Rotors 5 angesteuert. Dazu wird der Stator 6 durch das Steuergerät 3 mit elektrischem Strom beaufschlagt. Es kann beispielsweise sein, dass der Stator 6 das rotierende Magnetfeld 12 entlang einer q-Achse des Rotors 5 erzeugt, welche senkrecht zu einer Ausrichtung der Pole S-Pol und N-Pol des Rotors 5 steht.

Das Rotieren des Rotors 5 hat mehrere Wirkungen. Zunächst verrichtet das Werkzeug an der Aufnahme 8 eine Arbeit. Bei dieser Arbeit fällt beispielsweise der Metallstaub an, welcher sich in dem Spalt 9 ablagert. Außerdem wird der Rotor 5 auf eine verhältnismäßig hohe Drehzahl beschleunigt.

In einem Schritt S11 wird überprüft, ob eine Mindestbetriebsdauer in dem ersten Betriebsmodus M11 verstrichen ist. Die Mindestbetriebsdauer wird insbesondere seit einem letzten Ausführen eines zweiten Betriebsmodus M12 gemessen. Falls die Mindestbetriebsdauer in dem ersten Betriebsmodus M11 verstrichen ist, wird beispielsweise entschieden, dass in den zweiten Betriebsmodus M12 gewechselt werden soll. Es kann sein, dass sofort in den zweiten Betriebsmodus M12 gewechselt wird. Es kann auch noch weitere Überprüfungen geben, um einen zuverlässigen und/oder komfortablen Betrieb der mobilen Werkzeugmaschine 1 zu gewährleisten.

In einem Schritt S12 wird überwacht, ob ein lastfreier Zustand vorliegt. Beispielsweise wird in einem Teilschritt S13 erkannt, dass der lastfreie Zustand vorliegt, falls eine elektrische Stromstärke des dem Stator 6 zugeführten elektrischen Stroms einen voreingestellten Schwellwert nicht übertrifft.

Beispielsweise wird in einem anderen Teilschritt S14 anhand einer Benutzereingabe ein Vorliegen des lastfreien Zustands erkannt. Als Benutzereingabe wird hierbei insbesondere ein Loslassen eines Druckschalters erkannt. Der Druckschalter ist verschaltet, sodass ein Benutzer durch Drücken des Schalters eine Leistungsabgabe (Leistung über Leerlauf, bspw. Nennleistung der mobilen Werkzeugmaschine 1) anfordern kann. Wenn der Benutzer den Druckschalter loslässt, bedeutet dies, dass der Benutzer keine Leistungsabgabe fordert.

Daher ist dies ein geeigneter Auslösemoment zum Wechseln in den zweiten Betriebsmodus M12.

In einem Schritt S15 wird anhand eines Vorliegens des lastfreien Zustands entschieden, dass in den zweiten Betriebsmodus M12 gewechselt werden kann bzw. gewechselt wird.

In einem Schritt S16 wird in Abhängigkeit einer Rotordrehzahl entschieden, ob in den zweiten Betriebsmodus M12 gewechselt werden kann bzw. gewechselt wird. Dies ist von Vorteil beispielsweise in dem Fall, dass ein Ausführen des zweiten Betriebsmodus M12 eine Mindestdrehzahl zum Erzeugen eines Luftstroms durch den Spalt 9 mittels des Lüfters 10 benötigt, während in dem zweiten Betriebsmodus kein ausreichendes Drehmoment zum Antreiben des Lüfters 10 erzeugt wird. In diesem Fall muss der Lüfter 10 also zumindest teilweise seine Bewegungsenergie in eine Bewegung von Luft wandeln. Die Mindestdrehzahl kann auch vorgesehen sein, damit ein Anwender nicht anhand eines zu starken Drehzahlabfalls gestört bzw. irritiert wird.

Als nächstes wird der zweite Betriebsmodus M12 beschrieben. Der zweite Betriebsmodus M12 stellt das Reinigen des Spalts 9 sicher. Der zweite Betriebsmodus dient somit einem Erhalt des funktionsfähigen Zustands der mobilen Arbeitsmaschine 1.

Es kann sein, dass in einem Schritt S17 der Lüfter 10 zum Erzeugen des Luftstroms in dem Spalt 9 angetrieben wird. Beispielsweise wird ein separater Lüfterantrieb mit elektrischem Strom beaufschlagt.

In einem Schritt S18 wird die Ist-Winkelposition des Rotors 5 erfasst. Beispielsweise ist das Steuergerät 3 mit einem Winkelmesser signalgekoppelt, der mit dem Rotor 5 rotationsgekoppelt ist. Der Winkelmesser kann beispielsweise an dem Rotor 5, ggf. an dem mit dem Rotor 5 fest gekoppelten Lüfter 10 und/oder in dem Getriebe 7 eingebaut sein.

In einem Schritt S19 wird schließlich der Stator 6 zum Aufheben eines magnetischen Flusses 11 und 12 in dem Spalt 9 angesteuert. Dazu wird das rotierende Magnetfeld 12 derart positioniert, dass das Rotor-feste Magnetfeld 11 zumindest in einem Teilbereich 13 des Spalts 9 genau aufgehoben wird. Man kann sagen, dass das mitrotierende Magnetfeld 12 eingestellt wird, um dem Rotor-festen Magnetfeld 11 im Betrag zu gleichen und zumindest in dem Abschnitt 13 entgegen gerichtet zu sein. In dem Abschnitt 13 ist ein magnetischer Fluss aufgehoben.

In dem Schritt S19 kann der Stator 6 beispielsweise in Abhängigkeit der in S18 erfassten Ist-Winkelposition angesteuert werden. Beispielsweise kann aus einer Simulation eine Feldstärke des Rotor-festen Magnetfelds 11 vorab bestimmt werden, und kann auf dessen Grundlage eine zum Aufheben dieses Felds nötige Stromstärke bestimmt werden, welche dem Stator 6 bzw. dessen Wicklungen zuzuführen ist.

Vorzugsweise wird das mitrotierende Magnetfeld 12 entlang einer d-Achse des Rotors 5 ausgerichtet.

Das Erzeugen des Luftstroms in S17 und das Aufheben des magnetischen Flusses in S19 erfolgt vorzugsweise zeitgleich. Das Messen der Winkelposition in S18 erfolgt beispielsweise zeitgleich oder in Intervallen während des Aufheben des magnetischen Flusses in S19.

In einem Schritt S20 wird entschieden, nach einem Verstreichen einer Höchstbetriebsdauer in dem zweiten Betriebsmodus M12 in den ersten Betriebsmodus M11 zu wechseln. Die Höchstbetriebsdauer in dem zweiten Betriebsmodus M12 ist beispielsweise bemessen, um die Drehzahl des Rotors 5 nicht zu sehr abfallen zu lassen. Die Höchstbetriebsdauer ist andererseits bemessen, um einer ausreichenden Reinigung des Spalts 9 zu entsprechen. Ein gewählter Betrag der Höchstbetriebsdauer stellt daher einen gewählten Kompromiss dar. Die Höchstbetriebsdauer kann beispielsweise ein voreingestellter Wert von bspw. bis zu 10 Sekunden, wie 5 Sekunden, betragen. Die Höchstbetriebsdauer kann beispielsweise in Abhängigkeit einer Rotordrehzahl bestimmt werden.

Durch das Verfahren M10 mit den Betriebsmodi M11, M12 wird eine konstante Leistungsabgabe der mobilen Werkzeugmaschine 1 über eine lange Lebensdauer erreicht.

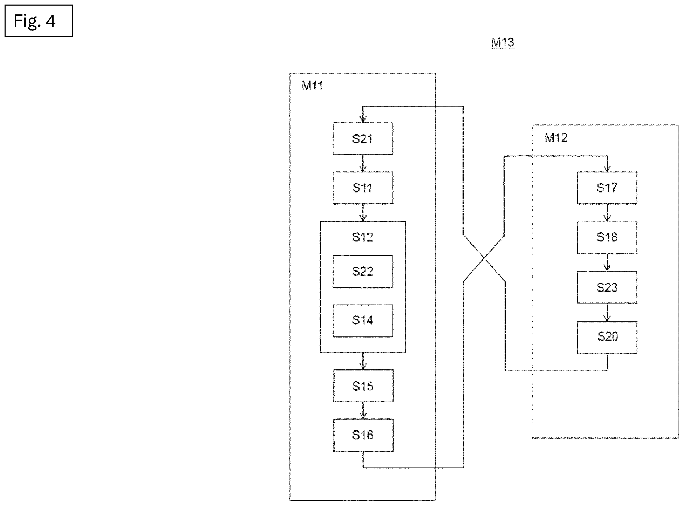

Im Folgenden wird anhand der Fig. 4 ein Verfahren M13 zum Betrieben der mobilen Werkzeugmaschine 1 beschrieben. Das Verfahren M13 ist für einen Rotor 5 mit einer ansteuerbaren Wicklung zum Erzeugen des Rotor-festen Magnetfelds 11 vorgesehen. Das beschriebene Verfahren M13 enthält optionale Merkmale. Es wird nur auf Unterschiede zum Verfahren M10 eingegangen.

In einem Schritt S21 in dem ersten Betriebsmodus M11 werden der Stator6 und der Rotor 5 zum Rotieren des Rotors 5 angesteuert. Beispielsweise wird der Rotor 5, d.h. zumindest eine Wicklung des Rotors 5, mit einem elektrischen Strom unter Gleichspannung versorgt. Beispielsweise wird der Stator 6, d.h. zumindest zwei Wicklungen des Stators 6, mit einem elektrischen Strom unter Wechselspannung versorgt.

In einem Schritt S22 in dem ersten Betriebsmodus M11 wird das Vorliegen des lastfreien Zustands anhand einer elektrischen Stromstärke eines dem Stator 6 zugeführten elektrischen Stroms und/oder einer elektrischen Stromstärke eines dem Rotor 5 zugeführten elektrischen Stroms erkannt.

In einem Schritt S23 in dem zweiten Betriebsmodus M12 werden der Stator 6 und der Rotor 5 gemeinsam abgestimmt zum Aufheben des magnetischen Flusses in dem Abschnitt bzw. Bereich 13 des Spalts 9 angesteuert. "Gemeinsam abgestimmt" bedeutet vorzugsweise, dass eine dem Stator 6 bzw. Wicklungen des Stators 6 zugeführte (jeweilige) elektrische Stromstärke einerseits und eine dem Rotor 5 bzw. der zumindest einen Wicklung des Rotors 5 zugeführte elektrische Stromstärke zueinander passend bemessen sind, um ein mitrotierendes Magnetfeld 12 und ein Rotor-festen Magnetfeld 11 zu erzeugen, welche den Bereich 13 zusammenwirkend Magnetwirkung-frei machen.

Im Übrigen wird auf die Beschreibung zum Verfahren M10 verwiesen.

Obwohl die vorliegende Erfindung anhand von Ausführungsbeispielen beschrieben wurde, ist sie vielfältig modifizierbar.

### BEZUGSZEICHENLISTE

- 1: mobile Werkzeugmaschine
- 2: Stromversorgung
- 3: Steuergerät
- 4: Elektromotor
- 5: Rotor
- 6: Stator
- 7: Getriebe
- 8: Aufnahme
- 9: Spalt
- 10: Lüfter
- 11: Rotor-festes Magnetfeld
- 12: rotierendes Magnetfeld
- 13: Bereich eines aufgehobenen magnetischen Flusses
- S: S-Pol
- N: N-Pol
- q: q-Achse
- d: d-Achse
- M10: Verfahren zum Betreiben einer Werkzeugmaschine
- M11: erster Betriebsmodus
- S10: Ansteuern des Stators zum Rotieren des Rotors
- S11: Wechseln in den zweiten Betriebsmodus nach einem Verstreichen einer Mindestbetriebsdauer
- S12: Überwachen, ob ein lastfreier Zustand vorliegt
- S13: Erkennen eines lastfreien Zustands in Abhängigkeit einer Stromstärke
- S14: Erkennen einer Benutzereingabe als lastfreier Zustand
- S15: Wechseln in den zweiten Betriebsmodus nur in einem lastfreien Zustand
- S16: Wechseln in den zweiten Betriebsmodus in Abhängigkeit einer Rotordrehzahl
- M12: zweiter Betriebsmodus
- S17: Antreiben eines Lüfters zum Erzeugen eines Luftstroms in dem Spalt
- S18: Erfassen einer Ist-Winkelposition des Rotors
- S19: Ansteuern des Stators zum Aufheben eines magnetischen Flusses
- S20: Wechseln in den ersten Betriebsmodus nach einem Verstreichen einer Höchstbetriebsdauer
- M13: Verfahren zum Betreiben einer Werkzeugmaschine
- S21: Ansteuern des Stators und des Rotors zum Rotieren des Rotors
- S22: Erkennen eines lastfreien Zustands in Abhängigkeit einer Stromstärke
- S23: Ansteuern des Stators und des Rotors gemeinsam abgestimmt zum Aufheben des magnetischen Flusses

## Patentansprüche

1. Verfahren (M10, M13) zum Betreiben einer mobilen Werkzeugmaschine (1), die einen Elektromotor (4) hat, der einen Rotor (5) zum Erzeugen eines Rotor-festen Magnetfelds (11) und einen Stator (6) zum Erzeugen eines rotierenden Magnetfelds (12) hat, wobei das Verfahren einen ersten Betriebsmodus (M11) hat, der enthält:
Ansteuern (S10, S21) des Stators (6) zum Rotieren des Rotors (5);
**dadurch gekennzeichnet, dass** das Verfahren (M10, M13) einen zweiten Betriebsmodus (M12) hat, der enthält:
Ansteuern (S19, S23) des Stators (6) zum Aufheben eines magnetischen Flusses zumindest in einem mitrotierenden Abschnitt (13) eines Spalts (9) zwischen dem Rotor (5) und dem Stator (6).

2. Verfahren nach Anspruch 1, **dadurch gekennzeichnet, dass** das Verfahren (M10, M13) enthält: Wechseln (S16) in den zweiten Betriebsmodus (M12) nur wenn eine Drehzahl des Rotors (5) eine Mindestdrehzahl nicht unterschreitet.

3. Verfahren nach einem der vorhergehenden Ansprüche, **dadurch gekennzeichnet, dass** das Verfahren (M10, M13) in dem zweiten Betriebsmodus (M12) enthält: Antreiben (S17) eines Lüfters (10) zum Erzeugen eines Luftstroms in dem Spalt (9).

4. Verfahren nach einem der vorhergehenden Ansprüche, **dadurch gekennzeichnet, dass** das Verfahren (M10, M13) enthält: Wechseln (S11) in den zweiten Betriebsmodus (M12) nach einem Verstreichen einer Mindestbetriebsdauer in dem ersten Betriebsmodus (M 11).

5. Verfahren nach einem der vorhergehenden Ansprüche, **dadurch gekennzeichnet, dass** das Verfahren (M10, M13) enthält: Wechseln (S20) in den ersten Betriebsmodus (M11) nach einem Verstreichen einer Höchstbetriebsdauer in dem zweiten Betriebsmodus (M12).

6. Verfahren nach einem der vorhergehenden Ansprüche, **dadurch gekennzeichnet, dass** das Verfahren (M10, M13) enthält: Überwachen (S12), ob in dem ersten Betriebsmodus ein lastfreier Zustand vorliegt; und Wechseln (S15) in den zweiten Betriebsmodus in einem lastfreien Zustand.

7. Verfahren nach Anspruch 6, **dadurch gekennzeichnet, dass** ein lastfreier Zustand erkannt wird (S13), falls eine Stromstärke eines dem Stator (6) zugeführten elektrischen Stroms nicht über einem Schwellwert liegt.

8. Verfahren nach einem der vorhergehenden Ansprüche, **dadurch gekennzeichnet, dass** das Verfahren (M10, M13) enthält: Wechseln (S14) in den zweiten Betriebsmodus (M12) auf eine Benutzereingabe zum Beenden des ersten Betriebsmodus (M11) hin.

9. Verfahren nach einem der vorhergehenden Ansprüche, **dadurch gekennzeichnet, dass** der Stator (6) zumindest zwei ansteuerbare Wicklungen enthält, wobei das Ansteuern (S19, S23) des Stators (6) zum Aufheben des magnetischen Flusses enthält: Erzeugen des mitrotierenden Magnetfelds (12), so dass das mitrotierende Magnetfeld (12) in dem mitrotierenden Abschnitt (13) des Spalts (9) dem Rotor-festen Magnetfeld (11) im Betrag gleicht und in der Richtung entgegengesetzt ist.

10. Verfahren nach einem der vorhergehenden Ansprüche, **dadurch gekennzeichnet, dass** das Verfahren (M10, M13) in dem zweiten Betriebsmodus enthält: Erfassen (S18) einer Ist-Winkelposition des Rotors (5); wobei der Stator (6) auf Grundlage der erfassten Ist-Winkelposition des Rotors (5) angesteuert wird.

11. Verfahren (M10) nach einem der Ansprüche 1 bis 10, **dadurch gekennzeichnet, dass** der Rotor (5) zum permanenten Erzeugen des Rotor-festen Magnetfelds (11) eingerichtet ist.

12. Verfahren (M13) nach einem der Ansprüche 1 bis 10, **dadurch gekennzeichnet, dass** der Rotor (5) zum veränderlichen Erzeugen des Rotor-festen Magnetfelds (11) eingerichtet ist, wobei in dem zweiten Betriebsmodus (M12) der Stator (6) und der Rotor (5) zum Aufheben des magnetischen Flusses abgestimmt angesteuert (S23) werden.

13. Computerprogrammprodukt, enthaltend Befehle, die bei einer Ausführung des Programms durch einen Computer, insbesondere ein Steuergerät (3) für eine mobile Werkzeugmaschine (1), diesen Computer veranlassen, das Verfahren (M10, M13) gemäß einem der Ansprüche 1 bis 12 auszuführen.

14. Steuergerät (3) für eine mobile Werkzeugmaschine (1), wobei das Steuergerät (3) zum Ansteuern zumindest eines Stators (6) eines Elektromotors (4) der Werkzeugmaschine (1) eingerichtet ist, **dadurch gekennzeichnet, dass** das Steuergerät (3) zum Ausführen des Verfahrens (M10, M13) nach einem der Ansprüche 1 bis 12 vorbereitet ist.

15. Werkzeugmaschine (1), insbesondere mobile Werkzeugmaschine (1), die einen Elektromotor (4) hat, der einen Rotor (5) zum Erzeugen eines Rotor-festen Magnetfelds (11) und einen Stator (6) zum Erzeugen eines rotierenden Magnetfelds (12) hat, wobei die Werkzeugmaschine (1) zum Ausführen des Verfahrens (M10, M13) nach einem der Ansprüche 1 bis 12 eingerichtet ist.
